(19) Europäisches Patentamt
European Patent Office
Office européen des brevets

(11) Veröffentlichungsnummer: **0 173 211**
**A2**

(12) # EUROPÄISCHE PATENTANMELDUNG

(21) Anmeldenummer: **85110363.0**

(22) Anmeldetag: **19.08.85**

(51) Int. Cl.4: **C 08 G 73/14**

(30) Priorität: **30.08.84 DE 3431857**

(43) Veröffentlichungstag der Anmeldung: **05.03.86**
**Patentblatt 86/10**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **Zecher, Wilfried, Dr., Treptowerstrasse 6,**
**D-5090 Leverkusen 1 (DE)**
Erfinder: **Reinking, Klaus, Dr., Robert-Stolz-Strasse 16b,**
**D-5632 Wermelskirchen 1 (DE)**
Erfinder: **Kleiner, Frank, Dr., Am Sonnenhang 62,**
**D-5090 Leverkusen 3 (DE)**

(54) **Verfahren zur Herstellung von Polyamidimiden.**

(57) Die Erfindung betrifft ein Verfahren zur Herstellung von Polyamidimiden und deren Verwendung als Kunststoffe.

EP 0 173 211 A2

0173211

BAYER AKTIENGESELLSCHAFT 5090 Leverkusen, Bayerwerk
Konzernverwaltung RP
Patentabteilung Eck/bo/c

## Verfahren zur Herstellung von Polyamidimiden

Die Erfindung betrifft ein Verfahren zur Herstellung von Polyamidimiden und deren Verwendung als Kunststoffe. Es ist bekannt, daß aliphatisch-aromatische Polyamidimide, die durch Umsetzung von Polyisocyanaten mit cyclischen Polycarbonsäureanhydriden und Lactamen (DE-AS 1 770 202) erhalten werden, durch besondere Eigenschaften wie hohe Erweichungstemperaturen und gute Elastizitätswerte gekennzeichnet sind und als hochtemperaturbeständige Beschichtungen, z.B. auf dem Elektroisolierlack-Sektor, Verwendung finden können.

Es wurde nun gefunden, daß Polymere mit ausgezeichneten Eigenschaften erhalten werden, wenn organische Polyisocyanate wie aliphatische, aliphatisch-aromatische und aromatische Diisocyanate mit cyclischen Polycarbonsäureanhydriden, Lactamen und Trimellitimidocarbonsäuren der Formel (I)

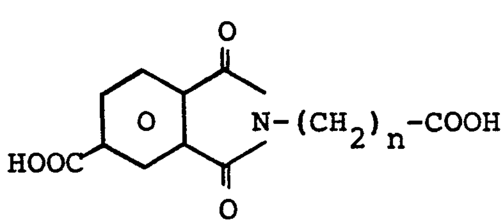

(I),

in der

n eine ganze Zahl von 1 - 20 bedeutet,

bei Temperaturen von 0 - 400°C und gegebenenfalls in einem Lösungsmittel zur Umsetzung gebracht werden.

Eine bevorzugte Ausführungsform besteht in der Verwendung von Lactamen, die mehr als fünf Kohlenstoffatome im Ring enthalten.

Es wurde weiterhin gefunden, daß diese Polymeren z.B. in Lösungsmitteln hergestellt und dann in einem Eindampfextruder bei Temperaturen von 250 - 400°C, gegebenenfalls unter Vakuum, aufkonzentriert werden können.

Die erfindungsgemäß hergestellten Polyamidimide zeichnen sich durch gute mechanische Werte wie Wärmeformbeständigkeit und Schlagzähigkeit, gutes Fließverhalten, erhöhte Zersetzungstemperaturen und eine im Vergleich von ohne Trimellitimidocarbonsäuren unter Verwendung von Lactamen oder deren Gemischen hergestellten Polymeren wesentlich hellere Farbe aus.

Die erfindungsgemäß verwendbaren Trimellitimidocarbonsäuren sind z.B. aus Trimellitsäureanhydrid und den Lactamen oder Aminocarbonsäuren nach bekannten Verfahren zugänglich. Sie können getrennt oder "in situ", z.B. durch Erhitzen von Trimellitsäureanhydrid mit einem Lactam und nachfolgende Zugabe der übrigen Komponenten, hergestellt werden. Die Trimellitimidocarbonsäuren entsprechen der Formel (I)

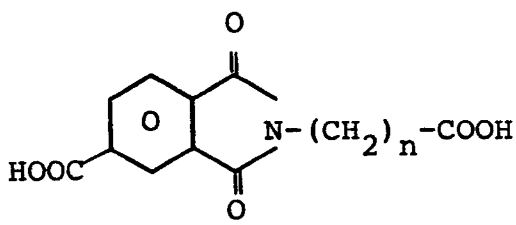

(I),

in welcher

der aliphatische Rest noch einfach oder mehrfach mit Alkylgruppen mit 1 - 6 C-Atomen substituiert sein kann und in der n eine ganze Zahl von 1 - 20 bedeutet.

Bevorzugt entspricht n den Zahlen 1, 3, 10 und 11, besonders bevorzugt wird Trimellitimidocapronsäure entsprechend n = 5 verwendet.

Erfindungsgemäß verwendbare Lactame sind beispielsweise solche der Formel (II)

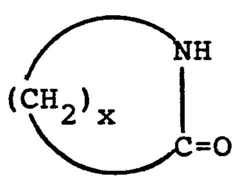

(II),

in welcher

x eine ganze Zahl von 2 - 20 bedeutet.

Vorzugsweise wird Caprolactam, besonders bevorzugt Laurinlactam (n = 11) eingesetzt.

Für das erfindungsgemäße Verfahren können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylen-Methylen-Strukturen, technische Gemische aus Toluylendiisocyanaten, m-Phenylen-diisocyanat und symmetrische Verbindungen wie 4,4'-Diisocyanato-diphenylmethan, 4,4'-Diisocyanato-diphenylether, Naphthylen-(1,5-diisocyanat, p-Phenylen-diisocyanat, 4,4'-Diisocyanato-diphenyl-dimethylmethan, analoge hydro-aromatische Diisocyanate wie 4,4'-Diisocyanato-dicyclohexylmethan sowie aliphatische Diisocyanate mit 2 - 12 C-Atomen wie Hexamethylendiisocyanat und isomere Trimethylhexamethylendiisocyanate und von Isophoron abgleitete Diisocyanate.

Eine besondere Ausführungsform besteht in der Verwendung von Gemischen aus 40 - 95 Gew.-% eines aromatischen Diisocyanats, z.B. 4,4-Diisocyanato-diphenylmethan oder 2,4- oder 2,6-Toluylendiisocyanat, und 5 - 60 Gew.-% eines aliphatischen Diisocyanats, z.B. 4,4'-Diisocyanato-dicyclohexylmethan, Isophoron-diisocyanat, Hexamethylendiisocyanat und Trimethyl-hexamethylendiisocyanat.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam,

Pyrrolidon oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanato-isocyanurate aus den beschriebenen Polyisocyanaten.

Zur Regulierung des Molekulargewichts können auch monofunktionelle Isocyanate wie z.B. Phenylisocyanat, Tolylisocyanat, Cyclohexylisocyanat, Stearylisocyanat, ω,ω,ω-Trifluorethylisocyanat und 3,5-Trifluormethyl-phenylisocyanat oder die entsprechenden Amine eingesetzt werden.

Zur Herstellung der erfindungsgemäß verwendbaren Polyamidimide können cyclische Polycarbonsäureanhydride verwendet werden, wie sie in DE-OS 1 770 202 und DE-OS 2 542 706 beschrieben werden, vorzugsweise Polycarbonsäureanhydride der Formel (III)

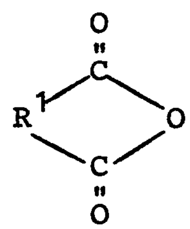

(III),

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im

aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen monofunktionell reagierende Carbonsäuren wie z.B. Phthalsäure oder deren Anhydrid, Benzoesäure, Palmitinsäure, n-Phenyl- oder N-Dodecyl-trimellitimidsäure eingesetzt, die weiterhin mit Alkyl oder Halogen wie Fluor oder Chlor substituiert sein können.

Die Herstellung der erfindungsgemäß verwendbaren Polyamidimide kann in Lösungsmitteln erfolgen, wie dies in DE-AS 1 770 202 beschrieben wird. Bevorzugt werden als Lösungsmittel Phenole wie Phenol und technische Gemische aus o-, m- und p-Kresolen verwendet, weiterhin Lactame wie Caprolactam oder N-Methylcaprolactam, Butyrolactam und Tetramethylensulfon.

Zur Herstellung der erfindungsgemäß verwendbaren Polyamidimide werden die Reaktionskomponenten mit oder ohne Lösungsmittel einige Minuten bis zu mehreren Stunden bei Temperaturen von 0 - 400°C gehalten. Der Verlauf der Reaktion läßt sich beispielsweise über die Gasentwicklung, den Anstieg der Viskosität und die IR-Spektren verfolgen.

Als besonders geeignet haben sich erfindungsgemäße Polyamidimide mit einer relativen Viskosität, gemessen an einer 1 %igen Lösung in Kresol bei 25°C, von 1,5 bis 3,0, vorzugsweise von 1,7 bis 2,6 mPas, erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestellt, dann aus der Lösung mit einem Nichtlöser wie z.B. Methanol gefällt und eventuell noch auf einem Extruder nachkondensiert werden.

Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren oder unter Druck zu arbeiten, 1 - 10 Stdn. auf eine Temperatur von 200 - 250°C, vorzugsweise von 210 - 230°C, zu erhitzen und den restlichen Konzentrationsvorgang, gegebenenfalls unter Nachkondensation, in einem Eindampfextruder, gegebenenfalls unter Vakuum, bei Temperaturen von 240 - 400°C, vorzugsweise von 280 - 350°C, auszuführen.

Im allgemeinen werden pro Val Isocyanat ein Val Carbonsäure oder cyclisches Carbonsäureanhydrid einschließlich von 0,1 - 0,9 Val, vorzugsweise 0,1 - 0,6 Val, Trimellitimidocapronsäure und pro Val Carbonsäureanhydrid 0,1 - 2 Val Lactam, vorzugsweise 0,2 - 0,6 Val Lactam zur Umsetzung gebracht, soch sind auch weitgehende Abweichungen von diesen Mengenverhältnissen möglich.

Eine weitere mögliche Ausführungsform besteht darin, überschüssiges Isocyanat mit Di- oder Tricarbonsäuren, z.B. Adipinsäure, Sebacinsäure, Terephthalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit endständigen Hydroxygruppen zur Reaktion zu bringen.

Die Herstellung der erfindungsgemäßen Polymeren kann durch Katalysatoren beeinflußt werden, z.B. durch Amine wie Triethylamin, 1,4-Diazabicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen(III)-chlorid, Kobaltacetat, Bleioxid, Bleiacetat, Zinnoctoat, Dibutylzinn-dilaurat, Kupferacetylacetonat, Titantetrabutylat, Alkaliphenolate und Natriumcyanid und durch Phosphorverbindungen wie Trialkylphosphin und Methylphospholinoxid.

Die erfindungsgemäßen Polymere zeichnen sich durch besondere Zugfestigkeit, E-Moduli und Wärmeformbeständigkeit aus. Ihre Eigneschaften können für die verschiedenen Anwendungsgebiete, z.B. als Thermoplaste, durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern, z.B. von Phenolen wie Dodecylphenol und Lactamen wie Dodecanlactam, und weiteren Polymeren variiert werden.

0173211

## Beispiele

### Beispiel 1

In eine Mischung von 2880 g aus gleichen Teilen Phenol und eines technischen Kresol-Gemisches werden 473 g Dodecanlactam gelöst und dann bei 120 - 130°C 1800 g 4,4'-Diisocyanatodiphenylmethan, 139,2 g eines Gemisches aus 80 % 2,4- und 20 % 2,6-Toluylendiisocyanat, 732 g Trimellitimidocapronsäure und 1075 g Trimellitsäureanhydrid eingetragen. Dann wird 2 Stunden bei 170°C, 2 Stunden bei 190°C und 4 Stunden bei 200 - 205°C gerührt. Die Kondensation erfolgt unter Abspaltung von Kohlendioxid. Anschließend werden 1700 g des Lösungsmittels abdestilliert und der Rückstand noch 2 Stunden bei 215°C gerührt. Beim Erkalten erhält man das Polyamidimid als sprödes Harz mit einem Festgehalt von ca. 75 Gew.-%. Die Viskosität einer 15 %igen Lösung in Kresol beträgt $\eta_{25}$ = 1770 mPas. Das Harz wird mit einer Schneidmühle zerkleinert und dann mit einem Eindampfextruder vom Typ ZSK 32 aufkonzentriert. Dabei beträgt die maximale Manteltemperatur 320°C und der Druck in der Eindampfzone 50 mbar. Man erhält ein hellgelbbraunes transparentes elastisches Harz mit einer relativen Viskosität von 2,10, gemessen bei 25°C an einer 1 %igen Lösung in Kresol.

### Beispiel 2

In 350 g Phenol/Kesol (1:1) und 45,2 g Caprolactam werden bei 120 - 130°C 2,38 g Phenylisocyanat, 17,4 g eines

Gemisches aus 80 % 2,4- und 20 % 2,6-Toluylendiisocyanat, 222,5 g 4,4'-Diisocyanatodiphenylmethan, 91,5 g Trimellitimidocapronsäure und 134,4 g Trimellitsäureanhydrid eingetragen. Die Kondensation zum Polyamidimid wird unter Rühren in 2 Stunden bei 170°C, 2 Stunden bei 190°C und 4 Stunden bei 205°C ausgeführt. Anschließend werden 210 g des Lösungsmittelgemisches abdestilliert und noch 4 Stunden bei 215°C gerührt. Man erhält das Polyamidimid als gelbbraunes Harz mit einem Festgehalt von ca. 75 Gew.-%. Die Viskosität einer 15 %igen Lösung in Kresol beträgt $\eta^{25}$ = 980 mPas.

50 g des so hergestellten Harzes werden aufgeschmolzen, mit 2,1 g Dodecanlactam versetzt und im Stickstoffstrom zuerst bei 250°C und dann bei 300°C eingedampft. Man erhält ein schmelzbares elastisches Harz mit einer relativen Viskosität $\eta$ = 1,98, gemessen bei 25°C an einer 1 %igen Lösung in Kresol.

Beispiel 3

In 180 g Phenol/Kresol (1:1) und 19,7 g Dodecanlactam werden bei 120 - 130°C 62,5 g 4,4'-Diisocyanatodiphenylmethan, 65,5 g 4,4'-Diisocyanatodicyclohexylmethan, 45,8 g Trimellitimidocapronsäure und 67,2 g Trimellitsäureanhydrid eingetragen. Dann wird 2 Stunden bei 170°C, 2 Stunden bei 190°C und 4 Stunden bei 205°C gerührt. Anschließend werden 108 g des Lösungsmittelgemisches abdestilliert und noch 2 Stunden bei 215°C gerührt. Man erhält beim Erkalten das Polyamidimid als helles sprödes Harz mit einem Festgehalt von ca. 75

Gew.-%. Die Viskosität einer 15 %igen Lösung des Polyamidimids in Kresol beträgt $\eta^{25}$ = 890 mPas.

Eine Probe des Harzes wird im Stickstoffstrom zuerst bei 250 und dann bei 300°C eingedampft. Man erhält ein helles elastisches Harz mit einer relativen Viskosität $\eta_l^{25}$ = 1,92.

Beispiel 4

In 170 g Phenol/Kresol (1:1) werden 22,6 g Caprolactam, 112,5 g 4,4'-Diisocyanatodiphenylmetha, 8,7 g 2,4-Toluylendiisocyanat, 91,5 g Trimellitimidocapronsäure und 38,4 g Trimellitsäureanhydrid in 3 Stunden bei 190°C und 6 Stunden bei 205°C zur Umsetzung gebracht. Anschließend wird mit 1130 g Kresol auf einen Festgehalt von ca. 15 Gew.-% verdünnt. Die Viskosität dieser Lösung beträgt $\eta^{25}$ = 920 mPas.

Aus einer Probe der so hergestellten Lösung wird mit überschüssigem Methanol das Polyamidimid als gelbes Pulver ausgefällt, das bei 300°C unter Stickstoff zu einem klaren elastischen Harz zusammengeschmolzen wird.

Beispiel 5

In 370 g Phenol/Kresol (1:1) und 78,8 g Dodecanlactam werden bei 120 - 130°C 200 g 4,4'-Diisocyanatodiphenylmethan, 42 g eines technischen Gemisches aus 2,2,4- und 2,4,4-Trimethylhexamethylen-(1,6)-diisocyanaten, 61,0 g Trimellitimidocapronsäure und 153,6 g Trimellitsäureanhydrid eingetragen. Die Kondensation wird unter Rühren 2 Stunden bei 170°C, 2 Stunden bei 190°C und 4 Stunden bei 205°C ausgeführt. Anschließend werden unter Vakuum 260 g des Lösungsmittelgemisches abdestilliert und der Rückstand noch 4 Stunden bei 215°C gerührt. Man erhält das Polyamidimid beim Erkalten als hell-gelbbraunes Harz. Der Festgehalt beträgt ca. 80 Gew.-%, die Viskosität einer 15 %igen Lösung in Kresol $\eta^{25}$ = 1180 mPas.

Eine Probe des so hergestellten Harzes wird im Stickstoffstrom bei 250 und 300°C zu einem hellen elastischen Polymeren eingebrannt. Die relative Viskosität beträgt $\eta^{25}$ = 2,04, gemessen an einer 1 %igen Lösung in Kresol.

Patentansprüche

1. Verfahren zur Herstellung von Polyamidimiden, dadurch gekennzeichnet, daß Polyisocyanate, cyclische Polycarbonsäureanhydride, Lactame und Trimellitimidocapronsäuren bei Temperaturen von 0 - 400°C und gegebenenfalls in einem Lösungsmittel und gegebenenfalls in Gegenwart eines Katalysators zur Umsetzung gebracht werden.

2. Verfahren nach Anspruch 1, dadurch gekennzeichnet, daß als Lactame Verbindungen der Formel (II)

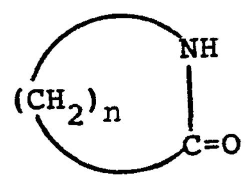

(II),

in der n ≥ 6 ist, verwendet werden.

3. Verfahren nach Anspruch 1, dadurch gekennzeichnet, daß als Trimellitimidocarbonsäure Trimellitimidocapronsäure und als Lactame Undecanlactam oder Dodecanlactam verwendet werden.

4. Verfahren nach Anspruch 1, dadurch gekennzeichnet, daß als cyclisches Polycarbonsäureanhydrid Trimellitsäureanhydrid verwendet wird.

5. Polyamidimide erhältlich nach Anspruch 1.
6. Verwendung von Polyamidimiden nach Anspruch 1 als Thermoplaste.